# EUROPEAN PATENT APPLICATION

(11) **EP 4 645 102 A1**
(43) Date of publication of application: **05.11.2025**
(21) Application number: 25170299.9
(22) Date of filing: 14.04.2025
(51) Int. Cl.: G06F 12/0831, G06F 12/0837

(54) **MULTI-DEVICE CACHED COMMANDS IN A NETWORK**

(30) Priority: 29.04.2024 US 202418649310
(71) Applicant: Avago Technologies International Sales Pte. Limited, Singapore 768923 (SG)
(72) Inventor: Jana, Arun Prakash, 560075 Bangalore, KA (IN)
(74) Representative: Grünecker Patent- und Rechtsanwälte PartG mbB

(57) **Abstract**

An example method of processing a command at a device sent by a host in a computing system, the host comprising a central processing unit (CPU) and host memory, is described. The method includes: receiving, at the device, the command from the host; parsing, by the device, the command to identify a flag in the command that is set and to obtain a first address that references a source buffer in the host memory; and reading, by the device in response to the flag being set, source data from the source buffer by reading from a coherent cache on the device using the first address, a cache coherency manager in the host managing the coherent cache.

## Description

### BACKGROUND

Compute Express Link^{™} (CXL) is an open standard for high-speed central processing unit (CPU)-to-device and CPU-to-memory interconnect aimed at high-performance computing environments. CXL is designed to improve the performance of data centers and servers by enabling faster and more efficient data transfer between the CPU, memory, and various devices, such as accelerators, graphics processing units (GPUs), network cards, and storage devices. CXL is built on top of the Peripheral Component Interconnect (PCI) Express^{®} (PCIe) infrastructure, leveraging the PCIe physical and electrical interface standards, which allows it to maintain compatibility with existing PCIe devices and ecosystems.

CXL is one of the emerging technologies to address the problem of memory sharing between a host CPU and a device. The CXL.cache protocol allows peripheral devices to coherently access and cache host memory with a low-latency request/response interface. This provides a new opportunity to access host memory from a peripheral device as a coherent cache instead of using direct memory access (DMA).

To configure, manage, and enumerate peripheral devices, CXL defines the CXL.io protocol. The CXL.io protocol, however, remains a one-to-one communication between the host CPU and peripheral device, where the host CPU issues a command and the peripheral device processes the command. The same mechanism is repeated for each peripheral device, even if the peripheral device is identical or supports the same command. Command payload and data transfers are performed in isolation for each peripheral device. The host CPU may transfer the same data for multiple devices during each one-to-one communication. There can be numerous enumerated devices attached to the host CPU and the attached devices can change over time. Managing peripheral devices one at a time is time-consuming. Moreover, data exchange for the CXL.io protocol uses DMA transfers between the host memory and the peripheral device. The memory regions used to DMA data to and from the host memory are managed in operating system (OS) kernel space, which is very limited (e.g., often to a few megabytes). This limits the number of devices to which one command can be issued concurrently.

### SUMMARY

In an embodiment, method of sending a command from a host to a first device in a computing system, the host comprising a central processing unit (CPU) and host memory, is described. The method includes allocating a source buffer in the host memory. The method includes writing, to the source buffer, source data to be consumed by the first device in response to the command. The method includes generating the command having a flag and a first address, the flag being set to indicate that the first device is to access the host memory using a coherent cache on the first device, the first address referencing the source buffer in the host memory. The method includes sending the command from the host to the first device.

In an embodiment, a method of processing a command at a device sent by a host in a computing system, the host comprising a central processing unit (CPU) and host memory, is described. The method includes receiving, at the device, the command from the host. The method includes parsing, by the device, the command to identify a flag in the command that is set and to obtain a first address that references a source buffer in the host memory. The method includes reading, by the device in response to the flag being set, source data from the source buffer by reading from a coherent cache on the device using the first address, wherein the coherent cache is managed by a cache coherency manager in the host.

In an embodiment, a computing system is described. The computing system includes a host comprising a central processing unit (CPU), a host memory, and a cache coherency manager. The computing system includes a first device connected to the host through a peripheral interconnect and the cache coherency manager, the first device including a coherent cache that is managed by the cache coherency manager. The computing system includes software, executing on the host, configured to allocate a source buffer in the host memory, write source data to the source buffer, generate a command having a flag and a first address, the flag being set, the first address referencing the source buffer in the host memory, and send the command to the first device. The first device is configured to receive the command, parse the command to identify that the flag is set and to obtain the first address, and read, in response to the flag being set, the source data from the source buffer by reading from the coherent cache using the first address.

### BRIEF DESCRIPTION OF THE DRAWINGS

Fig. 1 is a block diagram depicting a computing system according to embodiments.
Fig. 2 is a block diagram depicting a cache-coherent network of devices according to embodiments.
Fig. 3 is a block diagram depicting a command issued by a host to a device according to embodiments.
Figs. 4A-4C depict block diagrams showing example commands issued by a host to a device according to embodiments.
Fig. 5 is a flow diagram depicting a method of issuing a command from host to device and processing the results according to embodiments.
Fig. 6 is a flow diagram depicting a method of processing a command at a device received from a host according to embodiments.

### DETAILED DESCRIPTION

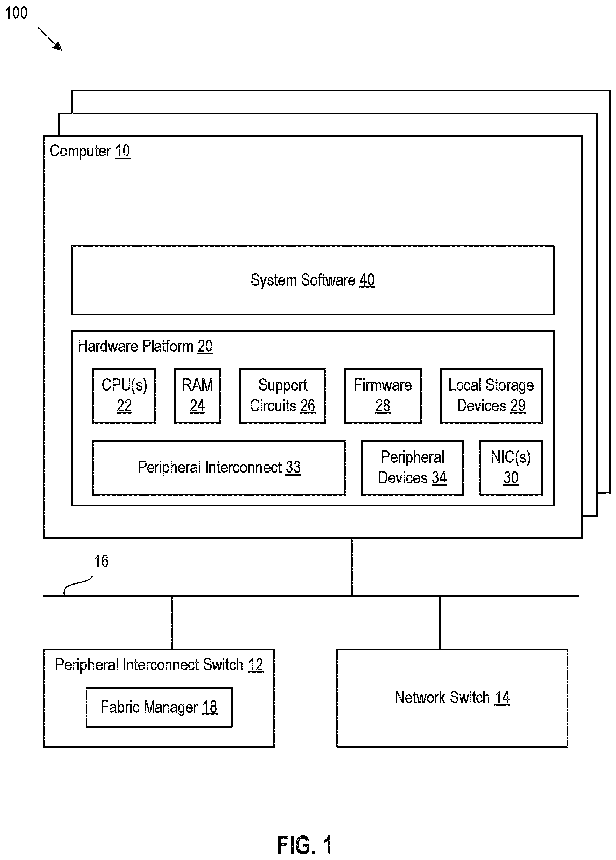

Fig. 1 is a block diagram depicting a computing system 100 according to embodiments. Computing system 100 includes a plurality of computers 10. Computer 10 comprises system software 40 executing on a hardware platform 20. Hardware platform 20 includes conventional components of a computing device, such as one or more central processing units (CPUs) 22, host memory (e.g., random access memory (RAM) 24), one or more network interface controllers (NICs) 30, firmware 28, support circuits 26, and local storage devices 29. CPUs 22 are configured to execute instructions, for example, executable instructions that perform one or more operations described herein, which may be stored in RAM 24. NICs 30 enable computer 10 to communicate with other devices using network protocols (e.g., Ethernet, Transmission Control Protocol/Internet Protocol (TCP/IP), etc.). NIC(s) 30 can be connected to a network switch 14 over a network 16. Network 16 comprises cabling, backplane interconnect, and the like for connecting devices. Local storage devices 29 include magnetic disks, solid-state disks, flash memory, and the like as well as combinations thereof. Support circuits 26 include various circuits that facilitate operation of hardware platform 20, such as power supplies, chipsets, input/output (IO) circuits, and the like. Firmware 28 includes instructions and configuration data for configuring hardware platform 20 upon power on until handing off execution system software 40.

Hardware platform 20 further includes peripheral interconnect 33 and peripheral devices 34. Peripheral devices 34 are connected to CPU(s) 22 and RAM 24 through peripheral interconnect 33. Peripheral interconnect may be an interconnect between CPU(s) and device(s). Peripheral devices 34 can include graphics processing units (GPUs), hardware accelerators, storage devices, and other well-known devices. Although shown separate, NICs 30 can be included in peripheral devices 34. In embodiments, peripheral interconnect 33 is compliant with a PCIe specification. In embodiments, peripheral interconnect 33 is further compliant with a CXL specification. PCIe and CXL specifications are well-known in the art. In this context, peripheral interconnect 33 is also known as CXL interconnect. Peripheral interconnect 33 supports links between CPU(s) 22 and peripheral devices 34 that multiplex multiple CXL protocols, including CXL.cache and CXL.io (also known as CXL links). CXL.cache and CXL.io protocols are discussed further below. In embodiments, commands sent using the CXL.io protocol are extended to support using coherent caches on peripheral devices 34 to exchange data with RAM 24. A coherent cache may be a memory coherent with one or more other memories. A memory may be coherent with another memory when data copies stored in the memories are consistent.

Peripheral interconnect 33 can be connected to an external peripheral interconnect switch through network 16 ("peripheral interconnect switch 12"). Peripheral interconnect 33 itself can include one or more peripheral interconnect switches. Each peripheral interconnect switch supports the CXL protocols, including CXL.cache and CXL.io. This allows CPU(s) 22 of one computer 10 to connect to peripheral devices 34 of another computer 10. In the context of CXL, a peripheral interconnect switch is known as a CXL switch. Peripheral interconnect switch 12 can include a fabric manager 18 for orchestrating which peripheral devices are attached to which host. A plurality of connected peripheral interconnect switches is referred to herein as a peripheral interconnect fabric (e.g., a CXL fabric). Although fabric manager 18 is shown in peripheral interconnect switch 12, fabric manager 18 comprises software or firmware that can be disposed in other parts of computing system 100 (e.g., in firmware 28, in a baseboard management controller (BMC), as software). A peripheral interconnect switch may be more simply referred to herein as a switch, and a plurality of connected peripheral interconnect switches as a fabric.

System software 40 can include a host operating system (OS). The host OS can be any commodity OS known in the art. Alternatively, system software 40 can include a hypervisor. A hypervisor abstracts processor, memory, storage, and network resources of hardware platform 20 to provide a virtual machine execution space within which multiple virtual machines (VMs) may be concurrently instantiated and executed.

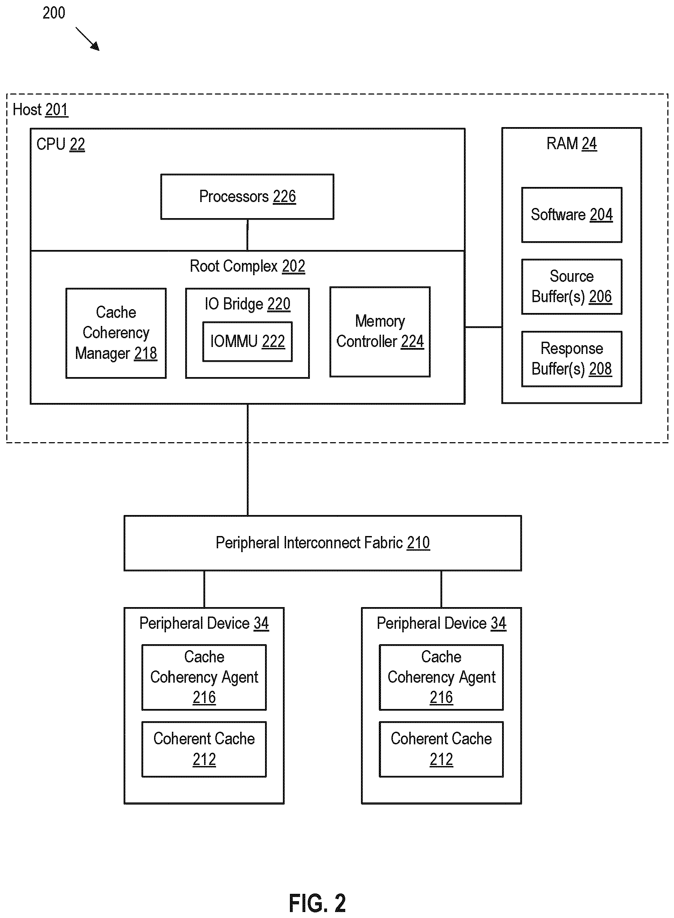

Fig. 2 is a block diagram depicting a network 200 of devices according to embodiments. Network 200 includes a host 201 and peripheral devices 34 connected to a peripheral interconnect fabric 210. Host 201 includes CPU 22 (also referred to as a host CPU) and RAM 24 (also referred to as host memory). CPU 22 is connected to peripheral interconnect fabric 210 by a root complex 202. CPU 22 includes one or more processors 226 connected to root complex 202 (e.g., processor cores). Root complex 202 comprises circuitry in CPU 22 (or external to CPU or a combination of internal and external circuitry) that functions as a bridge between host 201 and peripheral devices 34. For example, root complex 202 can include a cache coherency manager 218, an IO bridge 220, and a memory controller 224. IO bridge 220 can include an IO memory management unit (IOMMU) 222. Each peripheral device 34 includes a cache coherency agent 216 and a coherent cache 212. While cache coherency manager 218 is described as a circuit, in some embodiments its functions may be performed in software executed by CPU 22. In other embodiments, its functions may be performed by a combination of hardware and software.

Peripheral interconnect fabric 210 comprises a plurality of switches, some of which can be in computers 10, others of which can be external to computers, connected by network 16. Peripheral interconnect fabric 210 includes an interface connected to root complex 202 (e.g., a CXL interface). Each peripheral device 34 includes an interface connected to peripheral interconnect fabric 210 (e.g., CXL interfaces). Peripheral devices 34 can be disposed in the same computer 10 or across a plurality of computers 10. Peripheral interconnect fabric 210 can be configured by fabric manager 18 to connect peripheral devices 34 into the device hierarchy under root complex 202 of host 201.

RAM 24 includes an interface connected to memory controller 224 of root complex 202 (e.g., a double data rate (DDR) parallel interface). Memory controller 224 handles data transfer between CPU 22 and RAM 24. Cache coherency manager 218 cooperates with cache coherency agent 216 to manage coherent cache 212 in each peripheral device 34. Unlike other cache-coherent interconnects that are symmetric, such as Quick Path Interconnect (QPI), Ultra Path Interconnect (UPI), and the like, CXL is an asymmetric protocol. Cache coherency manager 218 orchestrates cache coherency of coherent caches 212 across peripheral devices 34. Cache coherency manager 218 ensures data consistency across coherent caches 212. The CXL protocol is asymmetric in that the function of ensuring cache consistency is present in root complex 202 rather than distributed across peripheral devices 34.

Peripheral devices 34 cache RAM 24 in coherent cache 212. Cache coherency manager 218 ensures cache consistency using a coherence protocol. In embodiments, the coherence protocol is CXL.cache, which is well-known in the art. CXL.cache employes a MESI coherence protocol, where the letters in the acronym represent the exclusive states of Modified (M), Exclusive (E), Shared (S), and Invalid (I), and a 64-byte cache line size. The CXL.cache protocol defines three channels in each direction, where the direction of the channels are Host-to-Device (H2D) and Device-to-Host (D2H). The term "host" refers to CPU(s) 22 and RAM 24 (host 201). The term "device" refers a peripheral device 34. Each direction has Request, Response, and Data channels. In embodiments, coherent cache 212 uses host physical addresses of RAM 24.

CPU 22 sends commands to peripheral devices 34 using an IO protocol. In embodiments, the IO protocol comprises the CXL.io protocol, but as modified as described further herein. The CXL.io protocol can be used for functions such as device discovery, device configuration, device initiation, and DMA access using non-coherent load-store semantics. The CXL.io protocol (without the modifications described herein) is well-known in the art. The IO protocol is implemented by IO bridge 220 in root complex 202.

CPU 22 can issue commands to a peripheral device 34 to perform any of the functions described above. Using the unmodified CXL.io protocol, CPU 22 issues a command to a single peripheral device 34 and peripheral device 34 processes the command and responds back to CPU 22. All data exchange is performed over DMA between peripheral device 34 and RAM 24. Command payload and data transfers are performed in isolation for each peripheral device 34. CPU 22 may end up transferring the same data for multiple peripheral devices 34 (e.g., a firmware update that includes transferring a new firmware image or common configuration details applicable to multiple devices). The data returned from peripheral devices 34 may be of the same pattern, e.g., querying the list of devices behind an IO controller. However, since the command is handled by each device individually, CPU 22 must each query and receive each device response in separate contexts. Further, configuration, management, and enumeration commands can be issued by users or scripts and hence the commands execute in serial fashion. The number of peripheral devices 34 may be numerous and may change over time. Managing peripheral devices 34 one at a time can be time-consuming. Certain commands can be device agnostic, e.g., querying device capabilities. However, unmodified CXL.io provides no way to broadcast such commands to all peripherals devices 34 connected to root complex 202. Further, unmodified CXL.io does not provide a provision to multicast a command and identify and handle the responses from all the devices together. In the context of a same command. Finally, regions of RAM 24 used for DMA transfer are part of kernel space of host OS (or hypervisor). Kernel space can be limited (e.g., a few megabytes), which limits the number of devices to which one command can be issued concurrently.

In embodiments, CPU 22 executes software 204 to issue commands to peripheral devices 34 using a modified version of CLX.io command structure. Software 204, for example, can be part of system software 40 or firmware 28. Commands are extended by adding a new flag, referred to as the cached buffers flag, in the command header. The cached buffers flag, when set, indicates that peripheral devices 34 are to read from, and write to, coherent cache 212 when exchanging data with RAM 24. If the cached buffers flag is unset, then a peripheral device 34 can use DMA transfers as discussed above. For commands with a set cached buffers flag, CPU 22 supplies memory addresses of buffers in RAM 24 that will be used for the data exchange. Buffers used for a command include source buffer(s) 206 and optionally response buffer(s) 208. Source buffer(s) 206 are used to share data from host to device. Source buffer(s) 206 can be common, e.g., to share a firmware image to all peripheral devices 34 of the same model, or distinct for each target device. Response buffer(s) 208 can be used by peripheral devices 34 to write response data for the host to read. Each peripheral device 34 that is the target of a command can have its own response buffer 208. The length of source buffer(s) 206 and response buffer(s) 208 depends on the command being issued.

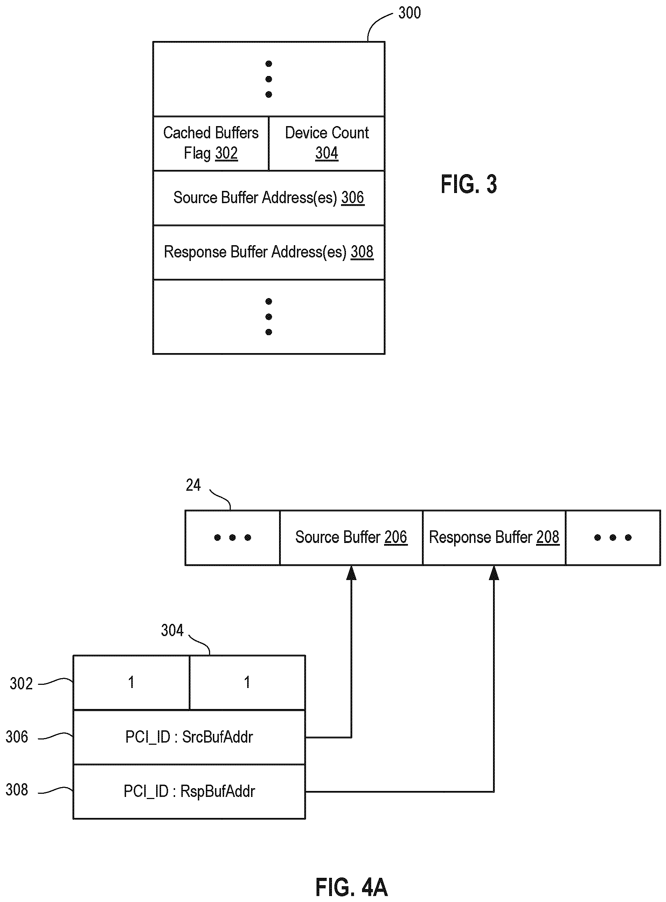

Fig. 3 is a block diagram depicting a command 300 issued by a host to a device according to embodiments. Command 300 includes a cached buffers flag 302, a device count 304, source buffer address(es) 306, and optionally response buffer address(es) 308. Other parts of command 300 can be as defined by the CXL.io protocol. Cached buffers flag 302 can be set to indicate that the device is to read from, and optionally write to, its coherent cache when exchanging data with the host. Cached buffers flag 302 can be a single bit that can be set (e.g., true) or unset (e.g., false). Device count 304 can be an integer value. Device count 304 indicates the number of target devices and hence the number of source/response buffer addresses in the command. Different examples of device count 304 are described below with respect to Figs. 4A-C. Source buffer address(es) 306 refer to one or more memory addresses of source buffer(s) 206 in host memory. Response buffer address(es), if present, include one or more memory addresses of response buffer(s) 208 in host memory.

Figs. 4A-C depict block diagrams showing example commands issued by a host to a device according to embodiments. As shown in Fig. 4A, a command includes a cached buffers flag 302 that is set (e.g., a true value). The command includes a device count 304 of one (an integer value). A device count of one indicates that the command is for a single device. The command includes a single source buffer address and a single response buffer address. Thus, source buffer address 306 refers to a memory address in the host memory for a source buffer 206, and response buffer address 308 refers to a memory address in the host memory for a response buffer 208. In embodiments, each of source buffer address 306 and response buffer address 308 can also be related to an identifier for a target device (e.g., PCI_ID). The command in Fig. 4A is a unicast command to a single target device having an ID of PCI_ID. The command in Fig. 4A indicates that the device is to consume source data from source buffer 206 and write response data to response buffer 208.

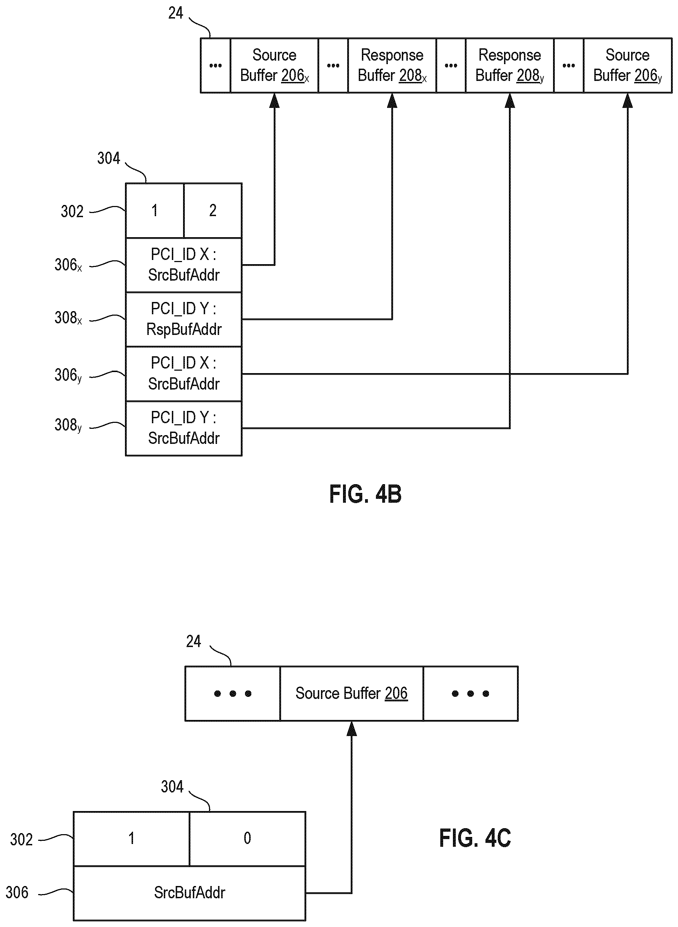

As shown in Fig. 4B, a command can be a multicast command to multiple devices. The command includes a cached buffers flag 302 that is set (e.g., a true value). The command includes a device count 304 of two, indicating that the command is being multicast to two devices. Since the device count is two, the command includes two source buffer addresses 306 and two response buffer addresses 308. Assume the two devices have IDs of PCI_ID X and PCI_ID Y. Then the command includes a source buffer address 306_{X} that refers to a memory address for a source buffer 206ₓ in host memory to be used by the PCI_ID X device, and a source buffer address 306_{Y} refers to a memory address for a source buffer 206_{Y} in host memory to be used by the PCI_ID Y device. The command includes a response buffer address 308_{X} that refers to a memory address for a response buffer 208_{X} in host memory to be used by PCI_ID Y device, and a response buffer address 308_{Y} that refers to a memory address for a response buffer 208_{Y} in host memory to be used by PCI_ID Y device. Device count 304 can be any integer greater than one to multicast the command to any number of devices greater than one.

As shown in Fig. 4C, a command can include only a source buffer from which the device is to consume data. In such case, the command includes a cached buffers flag 302 that is set and a device count 304 of zero. A device count 304 of zero indicates that the command omits response buffer address(es) 308 and includes a single source buffer address 306. Source buffer address 306 refers to a memory address in host memory for source buffer 206 and is for any device receiving the command. For this command, the device can respond to the host using a command completion on peripheral interconnect 33 (e.g., a PCIe command completion). The command in Fig. 4C can be sent to a single device or broadcast to multiple devices.

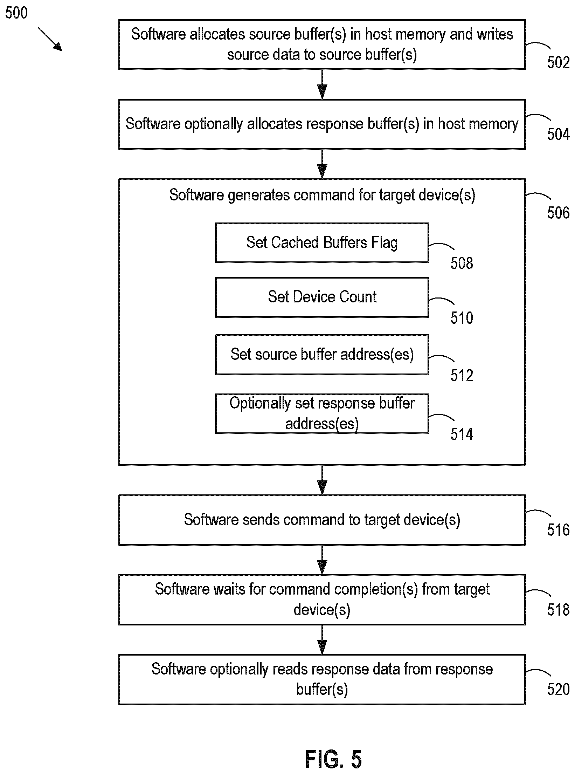

Fig. 5 is a flow diagram depicting a method 500 of issuing a command from host to device and processing the results according to embodiments. Method 500 is described as being performed by software 204 stored in RAM 24. In other embodiments, software performing method 500 can be stored in any type of memory, including firmware memory (e.g., in such case "software" may be referred to as "firmware"). In other embodiments, the functions of software 204 can be implemented in hardware using digital logic and, in such case, method 500 can be performed by hardware. In still other embodiments, any combination of software, firmware, and hardware can be used to perform method 500. In general, method 500 can be performed by a manager of a host, where in the example the manager is software 204. Method 500 begins at step 502, where software 204 allocates source buffer(s) 206 in RAM 24. Source buffer(s) 206 can be allocated in user-space instead of kernel-space (as in the DMA case described above). Software 204 also writes source data to source buffer(s) 206 to be consumed by one or more peripheral devices 34. At step 504, software 204 optionally allocates response buffer(s) 208 in RAM 24. Response buffer(s) 208 can be allocated in user-space instead of kernel-space (as in the DMA case).

At step 506, software 204 generates a command for target device(s) (one or more peripheral devices 34). At step 508, software 204 sets cached buffer flag 302 to indicate that each target device is to use its coherent cache when exchanging data with the host. At step 510, software 204 sets device count 304 to a value depending on whether the command targets a single device (Fig. 4A), is a multicast command to multiple devices (e.g., Fig. 4B), or is a broadcast command (e.g., Fig, 4C). At step 512, software 204 sets source buffer address(es) 306. At step 514, software 204 optionally sets response buffer address(es) 308.

At step 516, software 204 sends the command to the target device(s) (one or more of peripheral devices 34). The command can be sent to a single device or multiple devices in parallel. If sent to multiple devices in parallel, the command can be issued concurrently or near concurrently to the multiple devices. At step 518, software 204 waits for command completion(s) from the target device(s) received on peripheral interconnect 33 (e.g., PCIe command completions). At step 520, software 204 optionally reads response data from response buffer(s) 208.

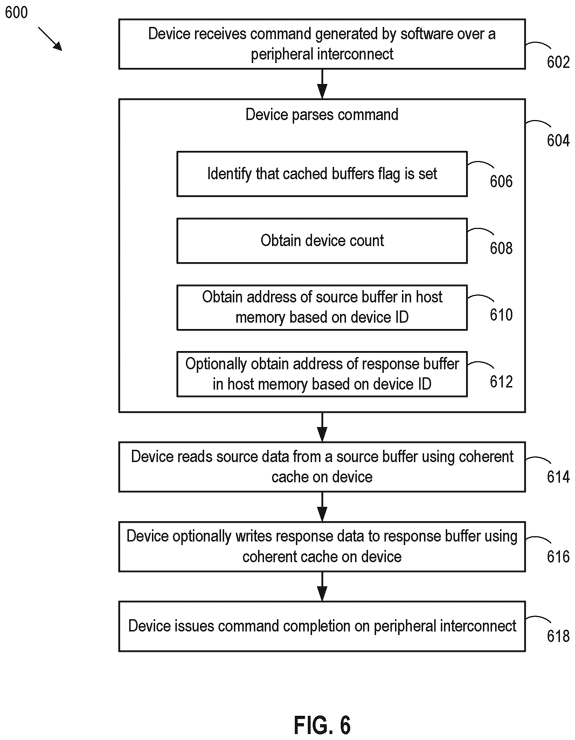

Fig. 6 is a flow diagram depicting a method 600 of processing a command at a device received from a host according to embodiments. Method 600 begins at step 602, where peripheral device 34 receives a command over a peripheral interconnect, the command being generated by software 204 executing on the host. At step 604, peripheral device 34 processes the command. Namely, at step 606, peripheral device 34 identifies that cached buffers flag 302 is set. At step 608, peripheral device 34 obtains the value of device count 304. At step 610, peripheral device 34 obtains an address of a source buffer 306 in the host (RAM 24) from the command. If device count 304 is greater than zero, peripheral device 34 looks for a matching ID related to source buffer address(es) 306. At step 612, peripheral device 34 optionally obtains an address of a response buffer 308 in the host (RAM 24) from the command. If device count 304 is greater than zero, peripheral device 34 obtains an address of a response buffer 308 by looking for a matching ID in response buffer address(es) 308.

At step 614, peripheral device 34 reads source data from a source buffer 206 using coherent cache 212. That is, peripheral device 34 issues read operations to coherent cache 212, which caches host memory using the CXL.cache protocol as described above. At step 616, peripheral device 34 optionally writes response data to a response buffer 208 using coherent cache 212. That is, peripheral device 34 issues write operations to coherent cache 212. At step 618, peripheral device 34 issues a command completion to the host over the peripheral interconnect (e.g., a PCIe completion response).

Techniques for sending a command from a host to a device, and processing a command sent from a host at a device, have been described. The techniques utilize cache in the devices that is coherent with host memory. Cache coherency is maintained through a cache-coherent interconnect using a coherency protocol, such as CXL.cache. No DMA transfers are required for exchanging data between devices and the host. The same data can be shared by the host with multiple devices from a single location in host memory. The devices can read the data concurrently and process the host command concurrently. Devices can write response data in distinct response buffers in host memory concurrently. When all devices have completed the command, the host can collate all the response data together and process the collated response data in the context of a single operation. The host shares the location of the common command source data to all devices concurrently or near concurrently and waits for command completion from all devices. When all devices have completed the command, the host reads the response data from the distinct response buffers in host memory. Thus, all devices process the commands concurrently or near concurrently. The ability to manage multiple similar devices together using one command saves time and simplifies the process. The techniques described herein allows for broadcasting a command to multiple devices and to process responses from each of the devices. The techniques further support multicasting a configuration, management, or enumeration command to similar devices and to distinguish the responses from each of the devices. Large chunks of host memory can be accessed over CXL. Thus, high volume of data exchanges can occur. The techniques obviate the per-device transfer-size limit (due to DMA from kernel space) and many devices can process a command concurrently.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A computing system, comprising:
a host comprising a central processing unit (CPU), a host memory, and a cache coherency manager;
a first device connected to the host through a peripheral interconnect and the cache coherency manager, the first device including a coherent cache that is managed by the cache coherency manager; and
software, executing on the host, operable to allocate a source buffer in the host memory, write source data to the source buffer, generate a command having a flag and a first address, the flag being set, the first address referencing the source buffer in the host memory, and send the command to the first device;
where the first device is operable to receive the command, parse the command to identify that the flag is set and to obtain the first address, and read, in response to the flag being set, the source data from the source buffer by reading from the coherent cache using the first address.

2. The computing system of claim 1, wherein the peripheral interconnect comprises a fabric having at least one switch and/or
wherein the first device is operable to send a command completion through the peripheral interconnect to the host in response to processing the command.

3. The computing system of claims 1 or 2, wherein the software is configured to allocate a response buffer in the host memory, and wherein the command includes a second address referencing the response buffer in the host memory,
in particular,
wherein the first device is operable to parse the command to identify the second address and write, in response to the flag being set, response data to the response buffer by writing to the coherent cache using the second address.

4. The computing system of one of the previous claims, further comprising:
a second device connected to the host through the peripheral interconnect and the cache coherency manager, the second device including a coherent cache that is managed by the cache coherency manager;
where the software is operable to allocate another source buffer in the host memory, generate the command having a second address, the second address referencing the other source buffer in the host memory, and send the command to the second device; and
where the second device is operable to receive the command, parse the command to identify that the flag is set and to obtain the second address, and read, in response to the flag being set, from the other source buffer by reading from the coherent cache using the second address.

5. A method of sending a command from a host to a first device in a computing system, the host comprising a central processing unit (CPU) and host memory, the method comprising:
allocating a source buffer in the host memory;
writing, to the source buffer, source data to be consumed by the first device in response to the command;
generating the command having a flag and a first address, the flag being set to indicate that the first device is to access the host memory using a coherent cache on the first device, the first address referencing the source buffer in the host memory; and
sending the command from the host to the first device.

6. The method of claim 5, wherein the first device is connected to the host through a peripheral interconnect and a cache coherency manager in the host, the cache coherency manager managing the coherent cache on the first device.

7. The method of claims 5 or 6, further comprising:
allocating a response buffer in the host memory;
wherein the command includes a second address referencing the response buffer in the host memory,
in particular,
further comprising:
reading response data generated by the first device in response to the command.

8. The method of one of claims 5 to 7, further comprising:
sending the command from the host to a second device of the computing system and the first device in parallel,
in particular,
further comprising:
sending the command to a plurality of devices including the first device; and
upon receiving a command completion from each of the plurality of devices, reading from response buffers in the memory.

9. The method of one of claims 5 to 8, wherein the source buffer comprises a first source buffer, wherein the source data comprises first source data, wherein the computing system includes a second device, and wherein the method comprises:
allocating a second source buffer in the host memory;
writing second source data to the second source buffer to be consumed by the second device in response to the command;
generating the command to include a second address referencing the second source buffer in the host memory; and
sending the command from the host to the second device.

10. A method of processing a command at a device sent by a host in a computing system, the host comprising a central processing unit (CPU) and host memory, the method comprising:
receiving, at the device, the command from the host;
parsing, by the device, the command to identify a flag in the command that is set and to obtain a first address that references a source buffer in the host memory; and
reading, by the device in response to the flag being set, source data from the source buffer by reading from a coherent cache on the device using the first address, wherein the coherent cache is managed by a cache coherency manager in the host.

11. The method of claim 10, wherein the device is connected to the host through a peripheral interconnect,
in particular,
wherein the peripheral interconnect comprises a fabric having at least one switch.

12. The method of claim 11, further comprising:
sending, by the device to the host, a command completion through the peripheral interconnect.

13. The method of claim 12, further comprising:
parsing, by the device, the command to identify a second address that references a response buffer in the host memory; and
writing, by the device in response to the flag being set, response data to the response buffer by writing to the coherent cache on the device using the second address.

14. The method of claim 12, wherein the command includes a second address for another source buffer in the host memory, wherein the command relates the first and second addresses with first and second device identifiers, respectively, wherein the device has the first device identifier, and wherein the method further comprises:
identifying, by the device, the first address based on the first device identifier.

15. The method of claim 14, further comprising:
parsing, by the device, the command to identify third and fourth addresses that reference first and second response buffers in the host memory, the command relating the third and fourth addresses with first and second device identifiers, respectively, the device having the first device identifier; and
writing, by the device in response to the flag being set, response data to the first response buffer by writing to the coherent cache on the device using the third address, the device identifying the third address based on the first device identifier.
